# EUROPEAN PATENT APPLICATION

(11) **EP 1 880 689 A1**
(43) Date of publication of application: **23.01.2008**
(21) Application number: 05748941.1
(22) Date of filing: 09.06.2005
(51) Int. Cl.: A61C 1/07, A61C 3/03

(54) **DENTAL CHIP**

(30) Priority: 27.04.2005 JP 2005129713; 27.04.2005 JP 2005129709; 02.05.2005 JP 2005134304; 02.05.2005 JP 2005134308
(71) Applicant: Osada Research Institute Ltd., Tokyo 141-8517 (JP)
(72) Inventor: NAKAGAWA, Masaki c/o OSADA RESEARCH INSTITUTE LTD., Tokyo ;1418517 (JP); SHOJI, Masakazu c/o OSADA RESEARCH INSTITUTE LTD.2, 1418517 (JP)
(74) Representative: Grünecker, Kinkeldey, Stockmair & Schwanhäusser Anwaltssozietät
(86) International application number: PCT/JP2005/010556
(87) International publication number: WO 2006/117883

(57) **Abstract**

A dental treatment instrument for extracting a tooth hard to grip by means of forceps effectively without the tooth while vibrating and cutting it. The dental chip (10) is connected detachably to a vibrator (1) and vibrated by the vibrator (1). The distal end side (10d) of the dental chip (10) has an arcuate cross-sectional shape perpendicular to the extension axis P of the chip. The distal end (10d') of the dental chip (10) is inserted between a tooth and the gum, arcuate both sides (10e, 10e) are applied to a tooth (50), the tooth (50) is loosened by applying vibration thereto, and then the tooth is extracted while hooking the distal end of the chip to the tooth.

## Description

### TECHNICAL FIELD

The present invention relates to a dental chip, and more particularly, to a dental chip suited for use in dental treatment in such a way that the chip is inserted at the side of a tooth and is vibrated to dig up and extract an impacted tooth or a broken root of a tooth, relates to a dental chip preferable for being used in dental treatment by a socket lift method in such a way that the distal end of the chip is inserted into a gap between a tooth and the gum to separate the tooth from the gum, relates to a dental chip preferable for being used in dental treatment in such a way that the chip is attached to a hand piece having a vibrator to cut a tooth root, jaw bone, alveolar bone, non-functional gum, etc., and relates to a dental chip preferable for being used in a bone regeneration procedure in dental treatment to cut a patient's own bone and scrape together powdered bone resulting from cutting.

### BACKGROUND OF THE INVENTION

Dental treatment often accompanies tooth extraction, which is conventionally carried out by using an extraction forceps. The extraction forceps is used to grip, shake, dislocate, and finally pluck out a tooth. A variety of types of extraction forcipes are provided for specific use in treatment of a foretooth, premolar, molar, residual dental root, upper jaw, lower jaw, milk tooth, permanent tooth, etc. Any type of extraction forcipes is composed of a beak for gripping a tooth, a handle to hold with fingers and the palm, and a joint connecting the beak and handle. The extraction forcipes, however, have difficulty in gripping a buried tooth, a broken tooth root, etc., and is, therefore, not handy in practical use.

Implanting an artificial tooth allowing a patient to chew with a feeling of almost using the patient's own tooth is popular in these days. In artificial tooth implanting, when the height of a bone is not sufficient for burying an implant, an upper jaw cavity is lifted up by the socket lift method. Such a new method now enables implant treatment on a person who has a physical makeup or condition that would make implant treatment impossible a decade ago.

A primary cause of impossibility in implanting is an insufficient amount of a bone that serves as the base of an implant, in which case the residual content and quality of the bone under a tooth are major factors for determine whether implanting is possible. For example, when an implant is placed in a back tooth on the upper jaw, a cavity called upper jaw cavity is present in the upper jaw bone and a sufficient amount of the bone, especially a sufficient height of the bone is necessary for implanting. Losing a tooth due to a periodontal disease, etc., however, results in a decrease in a bone amount in many cases, thus makes impossible the maintenance of a bone height necessary for treatment.

In the above case where a bone height necessary for treatment is insufficient, however, implant treatment becomes possible if treatment for increasing a bone amount is executed in advance. In carrying out the socket lift method, virtually no part of the jaw bone is chipped away with a drill, but a mucosa at the bottom of the upper jaw cavity is lifted with an instrument called osteotome to fill the cavity with a bone filler, and an implant is placed in a space formed of the filler.

These days, a hand piece equipped with a vibrator has generally been used in dental treatment to carry out removal of dental calculus, smoothing of a dental root surface (Root Plainning), etc.,.

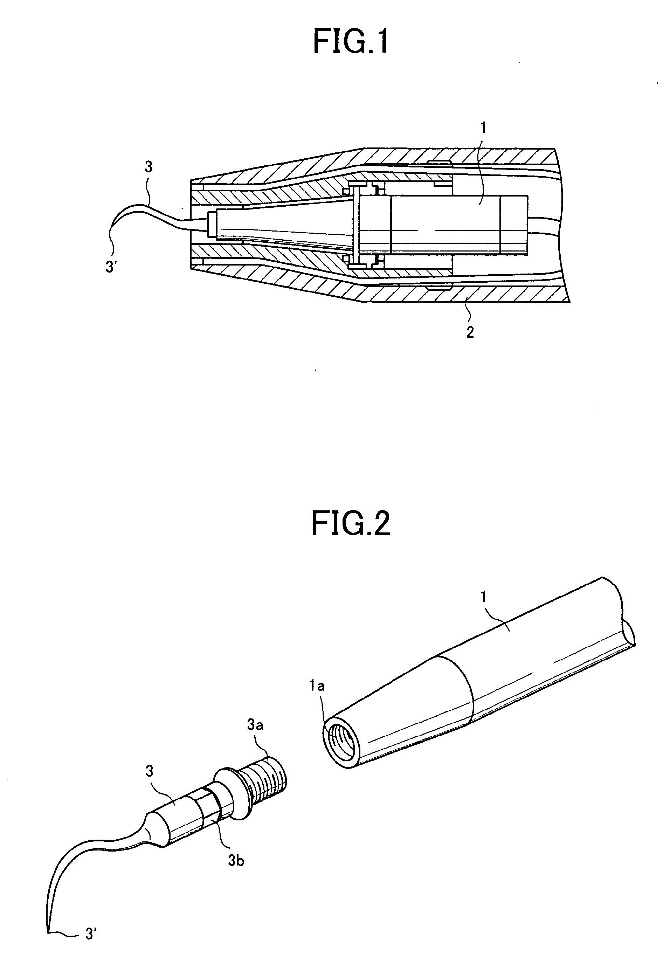

Fig. 1 is a principal part sectional block diagram for describing an example of a known ultrasonic scaler presented as an instance of a hand piece equipped with a vibrator. In Fig. 1, 1 denotes a vibrator (any desired known vibrator, such as an ultrasonic vibrator, air vibrator, and motor-operated vibrator), and 2 denotes a hand piece housing having the vibrator 1 built therein. The vibrator 1 is housed in the hand piece housing 2, and the vibrator 1 and housing 2 compose the vibratory hand piece. A dental chip 3 is attached detachably to the vibrator 1 of the hand piece, and is vibrated by the vibrator 1 to remove dental calculus, etc.

Fig. 2 is an explanatory view of an example of a mechanism for attaching the dental chip 3 detachably to the vibrator 1. The vibrator 1 has a female screw 1a formed on its front end, and the dental chip 3 has a male screw 3a on its front end (the side where the dental chip 3 is connected to the vibrator 1), which male screw 3a is screwed into the female screw 1a. A not shown attachment/detachment tool, such as a wrench, is engaged with a stepped portion 3b of the dental chip 3 to detachably screw the dental chip 3 into the vibrator 1 and tighten and fix the dental chip 3.

The front end (blade) 3' of the dental chip 3 is formed into various suggested shapes depending on purposes of use. For example, the front end of a hand scaler is formed into suggested shapes of a sickle, hoe, chisel, spoon, file, etc. Most of ultrasonic scaler chips, however, work only at the front end 3' of the dental chip 3, as shown in Figs. 1 and 2, have a limited range of application, thus not applicable to cutting, for example, a dental root, jaw bone, alveolar bone, or non-functional gum.

### DISCLOSURE OF THE INVENTION

### PROBLEMS TO BE SOLVED BY THE INVENTION

The present invention was conceived to achieve an object of providing a dental treatment instrument that is preferable for vibrating a tooth difficult for a forceps to grip, such as an impacted tooth and broken dental root, to effectively extract the tooth without gripping it and for cutting the surface of a bone, such as tooth, to scrape together bone powder resulting from cutting the tooth and move the bone powder to a desired spot.

The present invention was conceived to achieve another object of providing a vibratory chip that is preferable for being used in implementation of the socket lift method in dental treatment in such a way that the front end of the vibratory chip is inserted in between a bone and a mucosa to separate the bone from the mucosa.

The present invention was conceived to achieve still another object of providing a chip having a shape preferable for excising a dental root, jaw bone, alveolar bone, or non-functional gum, by devising an effective working face of a chip vibrated by a vibrator.

### MEANS FOR SOLVING THE PROBLEMS

A first technical means of the present invention is a dental chip connected detachably to a vibrator and vibrated by the vibrator, and the front end side of the chip has an arcuate sectional shape making a right angle with the extension axis of the chip.

A second technical means of the present invention is provided as the chip of the first technical means, and the chip is inclined inwardly at the front end thereof.

A third technical means of the present invention is provided as the chip of the first or second technical means, and the radius of the arcuate shape of the chip gets smaller gradually toward the front end to terminate.

A fourth technical means of the present invention is a dental chip connected detachably to a vibrator and vibrated by the vibrator, and a front end of the chip widens in a funnel shape.

A fifth technical means of the present invention is a dental chip connected detachably to a vibrator and vibrated by the vibrator, and a work portion on the front end side of the chip has edges on both ends of the cross sectional shape of the work portion, where the edges project in opposite directions to each other.

A sixth technical means of the present invention is provided as the chip of the fifth technical means, and the work portion cross sectional shape of the chip has a recessed bent portion at the projecting side of the edge in an area extending from the edge toward the central part of the cross sectional shape.

A seventh technical means of the present invention is provided as the chip of the fifth or sixth technical means, and the work portion cross sectional shape of the chip is symmetrical on 180° rotation with respect to the center of the chip.

An eighth technical means of the present invention is provided as the chip of any one of the fifth, sixth, and seventh technical means, and the work portion cross sectional shape of the chip is an S shape with mild curvature that is symmetrical on 180°rotation with respect to the center of the chip.

A ninth technical means of the present invention is a dental chip connected detachably to a vibrator and vibrated by the vibrator, and the front end of the dental chip is formed into a spoon-shaped recession and the edge of the spoon-shaped recession is formed into an edge (blade).

### EFFECT OF THE INVENTION

A dental chip of the present invention is a dental chip connected detachably to a vibrator and vibrated by the vibrator, and the front end side of the chip has an arcuate sectional shape making a right angle with the extension axis of the chip and both sides of the arcuate shape apply effective vibrations to a tooth. The dental chip is thus provided as a dental treatment instrument that is preferable for extracting a tooth without gripping the tooth, especially for facilitating extraction of a tooth difficult for a conventional forceps to grip, such as an impacted tooth and broken dental root, and for cutting the surface of a bone, such as tooth, scraping together bone powder resulting from cutting, and moving the bone powder away to a desired spot.

A dental chip of the present invention is a dental chip connected detachably to a vibrator and vibrated by the vibrator, and has a front end widening in a funnel shape. This enables concentration of vibrations on the front end periphery of the chip, thus enables more effective separation of a bone from a mucosa.

A dental chip of the present invention is a dental chip connected detachably to a vibrator and vibrated by the vibrator, and a work portion of the chip for cutting an alveolar bone, etc., has edges on both ends of the cross sectional shape of the work portion, which edges, specifically, project in opposite directions to each other on both ends. The work portion also has a recessed bent portion (clearance) at the projecting side of the edge in an area extending from the edge toward the center of the chip. Because of this, the dental chip makes less contact with a bone to cut, such as alveolar bone, to prevent cutting in, and offers fine cutting efficiency because the edges are rising at both ends.

A dental chip of the present invention is a dental chip connected detachably to a vibrator and vibrated by the vibrator, and the front end of the dental chip is formed into a spoon-shaped recess and the edge of the spoon-shaped recess is formed into an edge (blade) . Thus, a jaw bone, dental root, alveolar bone, non-functional gum, etc., can be cut with the edge, and powder resulting from cutting can be scraped into the spoon-shaped recess to be removed in performing effective dental treatment.

### BRIEF DESCRIPTION OF THE DRAWINGS

Fig. 1 is a principal part sectional block diagram for describing an example of a known ultrasonic scaler presented as an instance of a hand piece equipped with a vibrator.
Fig. 2 is an explanatory view of an example of an attachment/detachment mechanism for a vibrator and a chip.
Fig. 3 is a principal part exploded perspective view for describing an embodiment of a dental chip of the present invention.
Fig. 4 is the dental chip of Fig. 3 seen diagonally from below.
Fig. 5 is a diagram of an example of a state of use of the dental chip of Fig. 3.
Fig. 6 is an explanatory view of another embodiment of a dental chip of the present invention.
Fig. 7 is an explanatory view of an example of separation of a bone from a mucosa by the use of the dental chip of Fig. 4.
Fig. 8 is an explanatory view of still another embodiment of a dental chip of the present invention.
Fig. 9 is an explanatory view of an example of modification of the dental chip of Fig. 8.
Fig. 10 is an explanatory view of still another embodiment of a dental chip of the present invention.

### PREFERRED EMBODIMENTS OF THE INVENTION

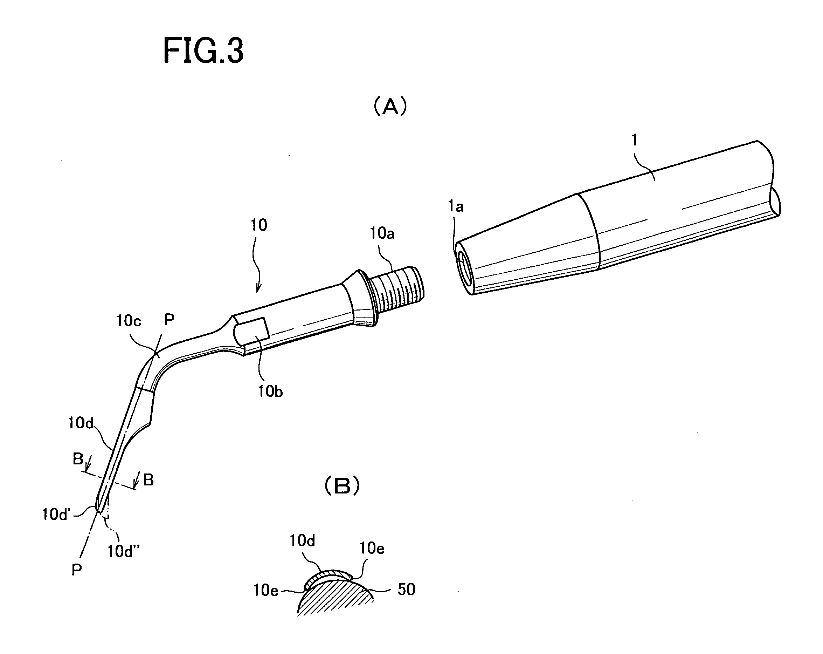

Fig. 3 is an exploded perspective view for describing an embodiment of a dental chip of the present invention. In Fig. 3, 1 denotes a vibrator (e.g., any desired known vibrator, such as an ultrasonic vibrator, air vibrator, and motor-operated vibrator). A female screw 1a is formed on the front end of the vibrator 1, and a male screw 10a of the dental chip 10 of the present invention is connected detachably to the female screw 1a. 10b denotes a wrench engaging portion with which a wrench is engaged when the dental chip 10 is screwed into the vibrator 1. The wrench is engaged with the wrench engaging portion 10b, and the dental chip 10 is turned with the wrench to tighten and fix the male screw 10a of the chip 10 into the female screw 1a of the vibrator 1.

The dental chip 10 of the present invention is connected to the vibrator 1 when used, as described above. On the dental chip 10, a vibration transmitting portion 10c has a section of an arcuate shape making a right angle with an axis (extension direction) P at the front end side 10d of the vibration transmitting portion 10c, as shown in Fig. 3 (B) (B-B line sectional view of Fig. 3(A)). Both sides 10e of the arcuate shape come in contact with a bone 50, such as tooth, and vibrate the tooth or cut the bone 50. A front end 10d' should preferably be bent inwardly with roundness, as depicted by a broken line 10d" in Fig. 3 (A) . The front end 10d" is hooked on a tooth to extract the tooth to carry out more effective tooth extraction, or is used effectively to cut a tooth, scrape together bone powder resulting from cutting, and move the bone powder away.

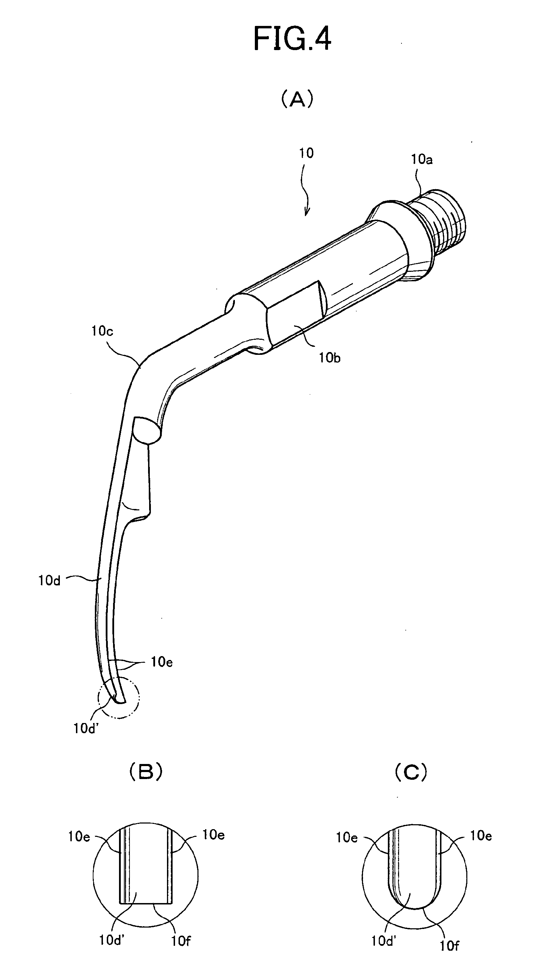

Fig. 4 is the arcuate portion 10d of the dental chip 10 of Fig. 3 that is seen diagonally from below. The front extremity 10f of the arcuate portion 10d may terminate as both sides 10e and 10e are kept parallel with each other with R (roundness) given to the outer surface side, as shown in Fig. 4(B), or may terminate as the arcuate shape gets smaller gradually, that is, may terminate as the chip front extremity 10f projects with roundness, as shown in Fig. 4(C). Being configured like this, the front end is easily inserted in between a tooth and the gum, and easily scrapes together powdered bone resulting from cutting.

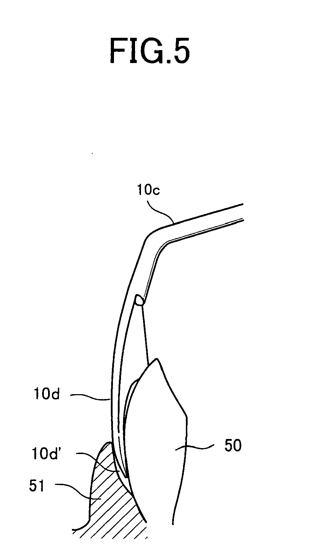

Fig. 5 is a diagram of an example of a state of use of the dental chip of the present invention. In Fig. 5, 50 denotes a bone, such as tooth, 51 denotes the gum, and 10d denotes the front end side of the dental chip 10 of the present invention. The front end 10d' of the dental chip 10 is bent with roundness toward the tooth 50 (see the broken line 10d" of Fig. 3 (A)), which allows the front end 10d' to be effectively inserted in between the tooth 50 and the gum 51. When the radius of the arcuate shape of the front end gets smaller gradually to terminate (front extremity 10f of Fig. 4 (C)), the front end can be inserted little by little from a sharp point at the center of the front end, thus inserted in more effectively along the tooth 50, which is effective in digging up and extracting an impacted tooth or a broken dental root. In addition, the dental chip with such a front end is preferable for being used to cut a tooth using both sides and the front end and scrape up powdered tooth bone resulting from cutting away from the tooth.

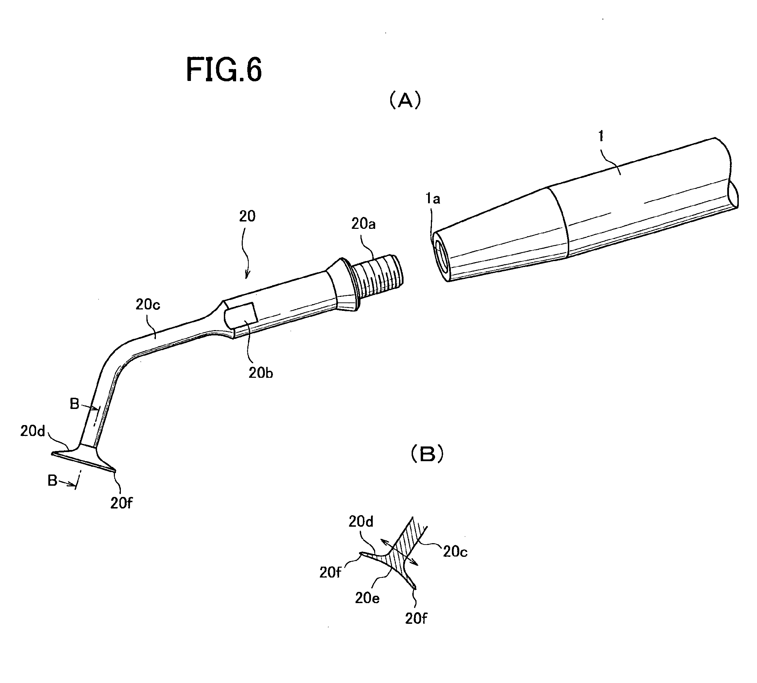

Fig. 6 is an explanatory view of another embodiment of a dental chip of the present invention. Fig. 6 (A) is a side view of the overall structure of the dental chip, and Fig. 6 (B) is a B-B line sectional view of Fig. 6 (A) . In Fig. 6, 1 denotes the vibrator (e.g., any known vibrator, such as an ultrasonic vibrator, air vibrator, and motor-operated vibrator), 20 denotes the dental chip of the present invention, 20a denotes a male screw that is to be screwed into the female screw 1a of the vibrator 1, and 20b denotes a wrench engaging portion with which a wrench is engaged when the dental chip 20 is screwed into the vibrator 1. The wrench is engaged with the wrench engaging portion 20b, and the dental chip 20 is turned with the wrench to tighten and fix the male screw 20a of the dental chip 20 into the female screw 1a of the vibrator 1.

In Fig. 6, 20c denotes a vibration transmitting portion, of which the front end 20d vibrates in parallel with the page surface (in an arrowed direction, as shown in Fig. 6(B)) when the vibrator 1 is driven. The chip front end 20d is formed into a funnel-shaped recess 20e, as shown in the sectional view of Fig. 6(B), and vibrations transmitted from the vibrator 1 concentrate on the edge 20f of the funnel-shaped recess 20e.
While Fig. 6 presents a case where the chip front end 20d is circular, the shape of the chip front end 20d is not limited to a circular shape, but may be any desired shape of an ellipse, etc., with a recess at the center thereof.

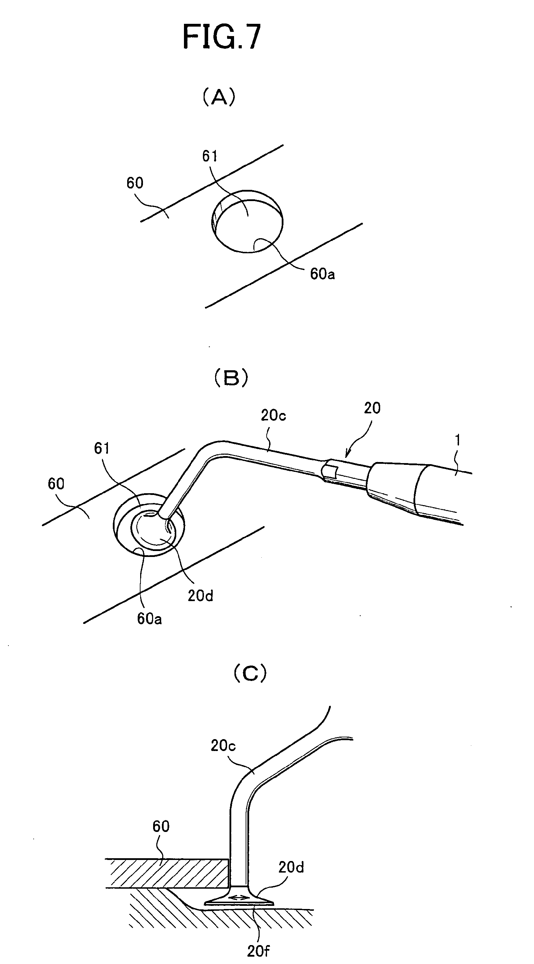

Fig. 7 is a principal part block diagram for describing an example of the socket lift method in dental treatment. A hole 60a is drilled on a bone 60 to expose a mucosa 61, as shown in Fig. 7(A), and the front end 20d of the dental chip 20 is inserted in between the bone 60 and the mucosa 61 through the hole 60a, as shown in Fig. 7(B), and then the vibration chip 20 is vibrated in an arrowed direction to vibrate the edge 20f of the chip front end 20d to separate the bone 60 from the mucosa 61, as shown in Fig. 7(C).

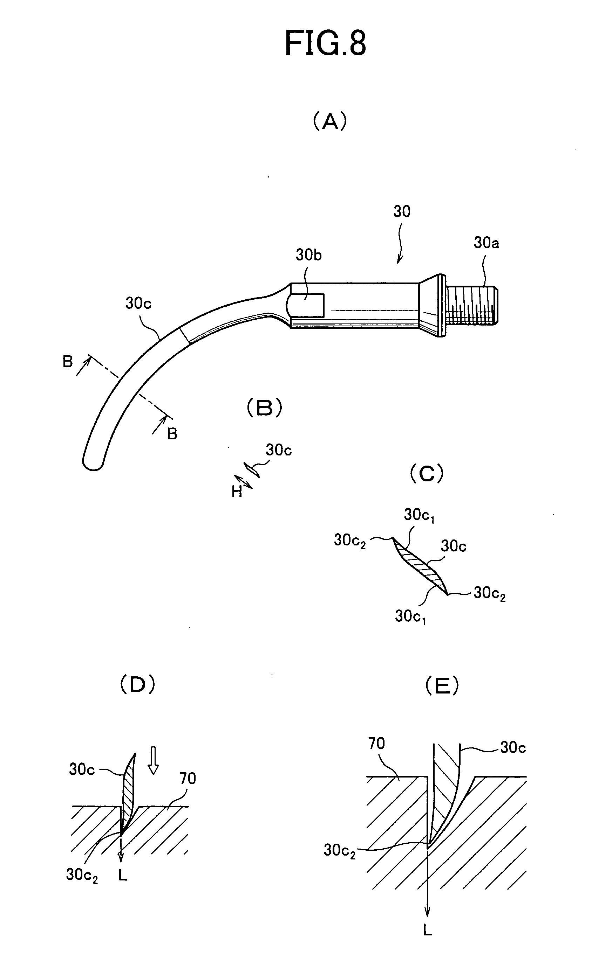

Fig. 8 is an explanatory view of still another embodiment of a dental chip of the present invention. Fig. 8 (A) is a side view of the overall structure of the dental chip, Fig. 8(B) is a B-B line sectional view of Fig. 8(A) (cross sectional view of a chip work portion), Fig. 8 (C) is a magnified view of Fig. 8 (B), Fig. 8 (D) is a diagram of a state of cutting of a tooth or an alveolar bone 70 using the dental chip of the present invention, and Fig. 8(E) is a magnified view of a cut portion of Fig. 8(D). In Fig. 8, 30 denotes the dental chip of the present invention, 30a denotes a screw that is to be screwed into the vibrator, and 30b denotes a wrench engaging portion with which a wrench is engaged when the chip 30 is screwed into the vibrator. As described in Figs. 1 and 2, the wrench is engaged with the wrench engaging portion 30b, and the dental chip 30 is turned with the wrench to tighten and fix the screw 30a of the chip 30 into the screw of the vibrator.

In Fig. 8, 30c denotes the work portion (edge), which vibrates in a direction indicated by an arrow H in Fig. 8(B) when the vibrator is driven. The work portion 30c should preferably have a section of an S shape with mild curvature, as shown in the magnified sectional view of Fig. 8(C). This S-shaped section forms clearances 30c₁, with which a tooth or the alveolar bone 70 is cut along a cut line L, as shown in Figs. 8 (D) and 8(E). According to the dental chip of the present invention, therefore, any spot except edges 30c₂ does not come in contact with the tooth or the alveolar bone 70. This allows effective cutting of the tooth or alveolar bone.

While the dental chip 30 of Fig. 8 is provided with the clearances 30c₁ by giving the work portion 30c the cross section of virtually an S shape, the shape of the cross section is not limited to an S shape but may be any shape.

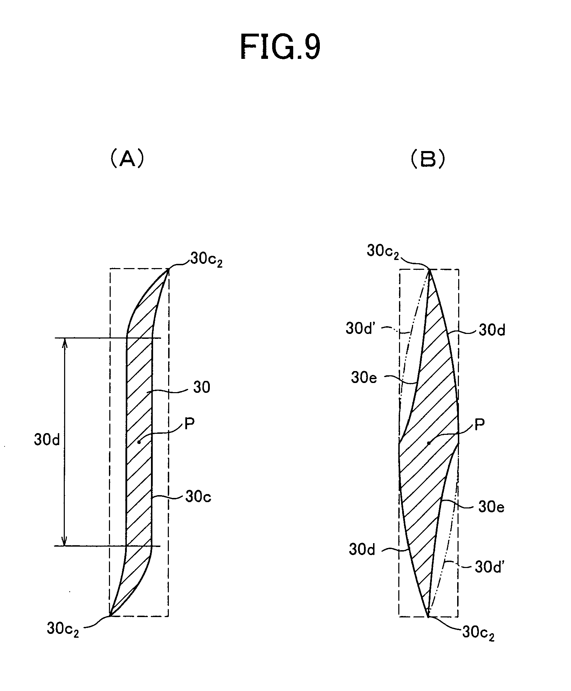

Fig. 9 is a cross sectional view of an example of modification of the dental chip of Fig. 8. Basically, as shown in Fig. 9(A), a central portion 30d is given a linear shape, and the edges 30c₂ and 30c₂ are turned in opposite directions to each other (directions different from each other at 180°) at both ends of the central portion 30d (rotation symmetry with respect to a central point P) . Fig. 9 (B) is a diagram of another shape of the dental chip of the present invention. In this case, a material has a projecting outline consisting of portions 30d and 30d' and is symmetrical with respect to the point P, and the portions 30d' of the material are machined into recess 30e. In this manner, the edges 30c₂ can also be made effectively.

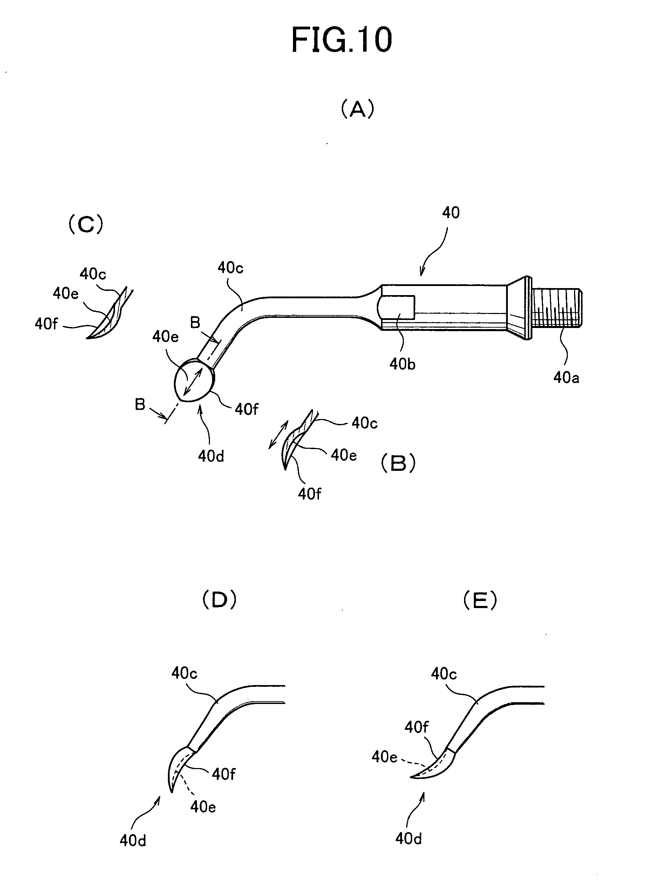

Fig. 10 is an explanatory view of still another embodiment of a dental chip of the present invention. Fig. 10(A) is a side view of the overall structure of the dental chip, and Fig. 10 (B) is a B-B line sectional view of Fig. 10 (A) . In Fig. 10(A), 40 denotes the dental chip of the present invention, 40a denotes a male screw that is to be screwed into the vibrator, and 40b denotes a wrench engaging portion with which a wrench is engaged when the dental chip 40 is screwed into the vibrator. As described in Figs. 1 and 2, the wrench is engaged with the wrench engaging portion 40b, and the dental chip 40 is turned with the wrench to tighten and fix the screw 40a of the dental chip 40 into the screw of the vibrator.

In Fig. 10, 40c denotes a vibration transmitting portion, of which the front end 40d vibrates in an arrowed direction when the vibrator is driven. The front end 40d is formed into a spoon-shaped recess 40e and the edge 40f of this recess 40e is formed into an edge (blade), as shown in the sectional view of Fig. 10(B). Using the edge 40f, a tooth, jaw bone, alveolar bone, non-functional gum, etc., is cut effectively, and resulting cut powder is scraped with the spoon-shaped recess to be effectively removed out.

Fig. 10 (C) is a B-B line sectional view showing a case where the spoon-shaped recess 40e is turned in the opposite direction. When two chips (for the left and right) with the spoon-shaped recess 40e different in direction from each other by 180° are provided and are used separately for specific purposes, for example, the right side or the left side of a tooth can be treated effectively.

Fig. 10 (D) is a diagram of a case where the spoon-shaped recess 40e is turned to this side (mouth exterior side), and Fig. 10 (E) is a diagram of a case where the spoon-shaped recess 40e of the Fig. 10 (D) is turned in the opposite direction, that is, the spoon-shaped recess 40e of the Fig. 10(D) is turned 180° in a different direction to cause the spoon-shaped recess 40e to face the mouth interior side. When four chips with the spoon-shaped recess 40e different in direction from each other by 90° (Figs. 10 (B), 10 (C), 10 (D), and 10 (E)) are provided and are used separately for different treatment positions, treatment from four directions becomes possible, which allows execution of effective treatment from all directions (four directions) in the mouth.

## Claims

1. A dental chip connected detachably to a vibrator and vibrated by the vibrator, wherein
a front end side of the chip has an arcuate sectional shape making a right angle with an extension axis of the chip.

2. The dental chip as defined in claim 1, wherein
the chip is inclined inwardly at a front end thereof.

3. The dental chip as defined in claim 1 or 2, wherein
the radius of the arcuate shape of the chip gets smaller gradually toward the front end to terminate.

4. A dental chip connected detachably to a vibrator and vibrated by the vibrator, wherein
a front end of the chip widens in a funnel shape.

5. A dental chip connected detachably to a vibrator and vibrated by the vibrator, wherein
a work portion on a front end side of the chip has edges on both ends of a cross sectional shape of the work portion, where the edges project in opposite directions to each other.

6. The dental chip as defined in claim 5, wherein
the work portion cross sectional shape of the chip has a recessed bent portion at a projecting side of the edge in an area extending from the edge toward a central part of the cross sectional shape.

7. The dental chip as defined in claim 5 or 6, wherein
the work portion cross sectional shape of the chip is symmetrical on 180° rotation with respect to the center of the chip.

8. The dental chip as defined in any one of claims 5 to 7, wherein
the work portion cross sectional shape of the chip is an S shape with mild curvature that is symmetrical on 180° rotation with respect to the center of the chip.

9. A dental chip connected detachably to a vibrator and vibrated by the vibrator, wherein
a front end of the chip is formed into a spoon-shaped recess, and the edge of the spoon-shaped recess is formed into a blade.
